# EUROPEAN PATENT APPLICATION

(11) **EP 3 680 596 A1**
(43) Date of publication of application: **15.07.2020**
(21) Application number: 19151339.9
(22) Date of filing: 11.01.2019
(51) Int. Cl.: F28D 20/02, F01K 3/20, F01K 25/00, F01K 25/02, H05B 3/00, F28D 20/00

(54) **STORAGE CONTAINER FOR A HEAT STORAGE MASS, HEAT STORAGE SYSTEM AND HEAT TRANSFER SYSTEM COMPRISING SUCH A STORAGE CONTAINER**

(71) Applicant: Yara International ASA, 0277 Oslo (NO)
(72) Inventor: Doppelbauer, Günter, D-47445 Moers (DE); Verbruggen, Marijn, 5427 DG BOEKEL (NL); Heeren, Arjan, 5427 DG BOEKEL (NL)
(74) Representative: De Clercq & Partners

(57) **Abstract**

The present disclosure relates to a storage container (1) for a heat storage mass that is convertible from a solid to a liquid phase by adding heat and from a liquid to a solid state by releasing heat, wherein the storage container comprises an upper wall (3), a bottom wall (5) and a lateral wall (7) extending in between the upper and the bottom wall, heating means (11) that are switchable on and off and that are provided for converting the heat storage mass (13) in the storage container from the solid to the liquid phase by adding heat to the heat storage mass when the heating means are switched on, and from the liquid to the solid phase by cooling down the liquid heat storage mass when the heating means are switched off, wherein the heating means (11) are in the form of one or more electrical heating elements located at the inside of the storage container against the lateral wall thereof or inside the lateral wall (7) of the storage container.

## Description

### Technical field

The present disclosure relates to heat storage. More in particular, the present disclosure relates to a heat storage mass that is convertible from a solid to a liquid phase by adding heat and from a liquid to a solid state by releasing heat. During conversion from a solid to a liquid phase, the heat storage mass stores latent heat, that can be released again when converting from the liquid to the solid phase. This heat storage mass can be applied in a heat transfer system in which heat, for example originating from a solar plant or combustion device, is stored in the heat storage mass during the liquefaction process, which liquid heat storage mass then can be transported towards a heat consuming system or device, for example a system for heating a building, for drying wet biomass or for producing steam for generating electricity, in which the heat from the liquid heat storage mass is released and used. During use, the liquid heat storage mass cools down and solidifies. The heat storage mass can for instance be a salt or a metal that can be molten and can solidify again.

### Background

In US4219075A, a heat storage device is described having a storage vessel, a fluid flow circuit external to and in fluid communication with the vessel, a heat storage mass in the vessel adapted to store heat in the course of its transition from a solid to a molten state, and a heat carrier liquid which is not or only slightly miscible with the melt of the storage mass, and where the specific gravity of the storage mass differs so considerably from the specific gravity of the melt that layers are formed. A pump or mixer rotor is so arranged in the heat carrier liquid layer that a vortex is formed, whereby a mixture of the storage mass melt and the heat carrier liquid is sucked up. The liquid storage mass penetrates into the vortex of the pump rotor into minute droplets which assume a spherical shape on account of the surface tension and which then give off their heat to the heat carrier liquid. After solidification, the small spheres are again moved back into the storage mass layer by gravity and by centrifugal forces. The storage vessel is slightly conically enlarged so that any solidified storage mass body detaches itself from the wall during charging.

The disadvantage of this device however is that on the one hand, a heat carrier liquid, and on the other hand, a pump rotor are necessary to take care of the release of the heat from the liquid heat storage mass. Furthermore, it is required that the heat carrier liquid is only slightly miscible or immiscible with the liquid heat storage mass. This is consequently a complex heat storage device.

In CN203829994U, a high temperature molten salt melting filtering device is described comprising a molten salt melting tank and a molten salt tank which are connected in a sealing mode through a pipeline. On the outside of the molten salt melting tank, a resistance wire is wound. At the bottom thereof, an emptying pipe is arranged and a high temperature molten salt emptying valve is arranged on the emptying pipe. A high temperature molten salt pump is installed on the molten salt tank, an impeller of the high temperature molten salt pump is located in a groove of the molten salt tank, and the groove is formed at the lowest point of the molten salt tank. The emptying pipe is arranged in the groove, and a high temperature molten salt emptying valve is installed on the emptying pipe.

A disadvantage of this system is that the heat transfer of the resistance wire to the salt to melt it is done in an inefficient way.

The present disclosure therefore aims to provide a storage container for a heat storage mass according to the preamble of claim 1, wherein the conversion of the heat storage mass from a solid to a liquid phase and the other way around is performed in a simple and more heat efficient way.

### Summary

According to a first aspect of the present disclosure, a storage container for a heat storage mass that is convertible from a solid to a liquid phase by adding heat and from a liquid to a solid state by releasing heat, comprises an upper wall, a bottom wall and a lateral wall extending in between the upper and the bottom wall, heating means that are switchable on and off and that are provided for converting the heat storage mass in the storage container from the solid to the liquid phase by adding heat to the heat storage mass when the heating means are switched on, and from the liquid to the solid phase by cooling down the liquid heat storage mass when the heating means are switched off. The heating means are in the form of one or more electrical heating elements located inside the storage container against the lateral wall thereof or inside the lateral wall of the storage container.

Electrical heating elements are elements that convert electric current to heat. The heating elements comprise an electrical resistor which works on the principle of Joule heating, i.e. an electric current passing through a resistor will convert that electrical energy into heat energy.

Applying electrical heating elements is a simple solution to heat the heat storage mass. Furthermore, placing the electrical heating elements inside the storage container against the lateral wall thereof or inside the lateral wall of the storage container has the advantage that the electrical heating elements are situated close to the heat storage mass through which the heat produced thereby is quickly and consequently efficiently transferred to the heat storage mass. In case the electrical heating elements are situated inside the storage container against the lateral wall thereof, there is a direct contact between the heat storage mass and the heating elements through which the heating elements can directly transfer the produced heat to the heat storage mass resulting in a very efficient heat transfer.

In an embodiment of a storage container according to the disclosure, the electrical heating means are solely situated at the inside of the storage container against the lateral wall thereof or inside the lateral wall of the storage container. This gives the advantage that the core of the solid heat storage mass inside the container liquefies later than the outer surface of the solid salt through which it is prevented that the solid part of the heat storage mass is lowered and the risk of exerting high forces on the lateral wall of the storage container is reduced.

In a possible embodiment of a storage container according to the disclosure, the heat storage mass has an upper surface, and the storage container comprises further electric heating elements located inside the storage container spaced apart from the lateral wall and extending through the upper surface of the heat storage mass. These further heating elements are arranged to start heating the heat storage mass once the upper surface of the heat storage mass has been liquefied. With these further electric heating elements, the melting of the heat storage mass can be accelerated.

These heating elements more in particular can be fixed to the upper wall of the storage container.

Another disadvantage of CN203829994U as described above is that the molten salt is kept in a liquid state once it has been molten. The reason therefore is that solidified salt fills all the space in between the lateral wall of the storage container. During heating, the salt expands and consequently exerts large forces on the lateral wall of the storage container setting high demands concerning the strength of the lateral wall of the storage container. When the salt is however molten for the first time, there is space between the salt particles allowing the salt to expand without exerting forces on the lateral wall of the storage container, through which in known devices the molten salt is often kept in a liquid state once it has been molten. The same happens when melting and solidifying metals.

This problem is solved by providing a storage container according to the present disclosure as described above, wherein the lateral wall has a downwardly narrowing, truncated and circumferentially walled shape and having an inclination angle of at least 10 degrees versus a vertical plane. In this way, the expanding liquefying heat storage mass can rise up without getting stuck between the lateral wall and consequently without exerting big forces on the lateral wall of the storage container. It should be observed that this and the following embodiments also allow of being applied to a storage container that is not equipped with heating means as described above, and can thus also be applied advantageously to a storage container in which the heating means are other than electrical heating means and/or where the heating means are at outside of the storage container.

In order to even more reduce the forces on the lateral wall of the storage container, the inclination angle of the lateral wall versus the vertical plane is at least 20 degrees, and more in particular around 25 degrees.

In an embodiment of a storage container according to the present disclosure, the lateral wall has a downwardly narrowing truncated conical shape. Such a conical shape has no corners, as such the heat storage mass cannot get stuck nor leave residues in corners.

A further disadvantage of the device as described in US4219075A is that there no possibility to let the liquid heat storage mass leave the storage container in order to transport it to a heat consumption system / device outside the storage container.

This problem is solved by providing a storage container according to the present disclosure, wherein an output opening is provided that, during operation, is constantly in fluid connection with the liquid heat storage mass. Being in fluid connection means that the output opening itself can be in direct contact with the liquid heat transfer mass or via an open end of a tube. This has the advantage that during operation, there is enough liquid heat storage mass to continuously leave the storage container.

In an optional embodiment of a storage container according to the present disclosure, the output opening is located in the bottom wall of the storage container.

In an embodiment of a storage container according to the present disclosure, the storage container comprises a valve which is operable to open and close the output opening.

According to another aspect of the disclosure, a heat storage system is provided comprising a storage container according to the present disclosure as described above, a shredder for shredding large pieces of solid heat storage mass into smaller pieces, as well as transport means for transporting the smaller pieces of solid heat storage mass to a filling opening provided in the storage container.

According to a further aspect of the present disclosure, a heat transfer system is provided comprising a storage container according to the disclosure as described above, heat exchange means and a circuit connecting the storage container to the heat exchange means and provided for circulating the liquid heat storage mass between the heat exchange means and the container. This circuit has an upper and a lower point and the storage container is situated at the lower point of the circuit.

According to an alternative or additional aspect of the heat transfer system disclosed herein, the heat exchanger (or a part thereof) is positioned inside the storage container according to the disclosure as described above. By for instance providing inside the storage container a heat exchanger or a liquid circuit of the heat exchanger, this circuit can be used to cool down the heat storage mass when needed. This provides a solution for situations where flexible timing is necessary, for instance when rapid cooling or heating is required. In a particular embodiment the heat transfer system is provided with a heat exchanger (or a part thereof) positioned inside the storage container as well as heat exchange means and a circuit connecting the storage container to the heat exchange means and provided for circulating the liquid heat storage mass between the heat exchange means and the container.

In a further aspect the present disclosure refers to a method for storing heat by using a storage container as disclosed herein. In particular the method provides in a storage container comprising a heat storage mass that is convertible from a solid to a liquid phase by adding heat and from a liquid to a solid state by releasing heat, wherein the method comprises the steps of:
- converting the heat storage mass from a solid to a liquid phase by adding heat using heating means; and
- converting the heat storage mass from liquid to solid phase by cooling down the liquid heat storage mass;
wherein the heating means are in the form of one or more electrical heating elements located at the inside of the storage container against the lateral wall thereof or inside the lateral wall of the storage container.

The cooling down step in particular occurs in a passive form, by switching of the heating means.

In particular, the method as disclosed herein uses salt or metal as heat storage mass.

In a particular embodiment the method as disclosed here further comprises the steps of shredding large pieces of solid heat storage mass into smaller pieces, transporting the smaller pieces of solid heat storage mass to the storage container, and introducing the smaller pieces of solid heat storage mass into the storage container.

In a further aspect, the present disclosure provides in a the method for transferring heat using the heat storage method as disclosed here, further comprising the steps of circulating the liquid heat storage mass between heat exchange means and the storage container, wherein heat from the liquid heat storage mass is extracted by the heat exchange means. Alternatively or additionally, the present disclosure provides in a the method for transferring heat using the heat storage method as disclosed here, further comprising the steps of exchanging heat between the liquid heat storage mass and the heat exchanger (or a part thereof) in the storage container according to the disclosure as described above. In particular the heat extracted by the heat exchange means is converted into energy.

### Brief description of the drawings

The present disclosure will be further elucidated below on the basis of drawings. These drawings show embodiments of the heat storage system, the storage container and a heat transfer system according to the present disclosure. Although the present disclosure is elucidated above on the basis of the given drawings, it should be noted that this disclosure is not limited whatsoever to the embodiments shown in the drawings. The disclosure also extends to all embodiments deviating from the embodiments shown in the drawings within the context defined by the claims.
In the drawings:
- figure 1, represents an embodiment of a heat storage system according to the present disclosure;
- figure 2, represents a cross-section of a storage container of the heat storage system as shown in figure 1; and
- figure 3, represents a schematic representation of an energy generation system comprising a heat transfer system according to the present disclosure comprising in its turn a storage container as shown in figure 2.

### Detailed description of the drawings

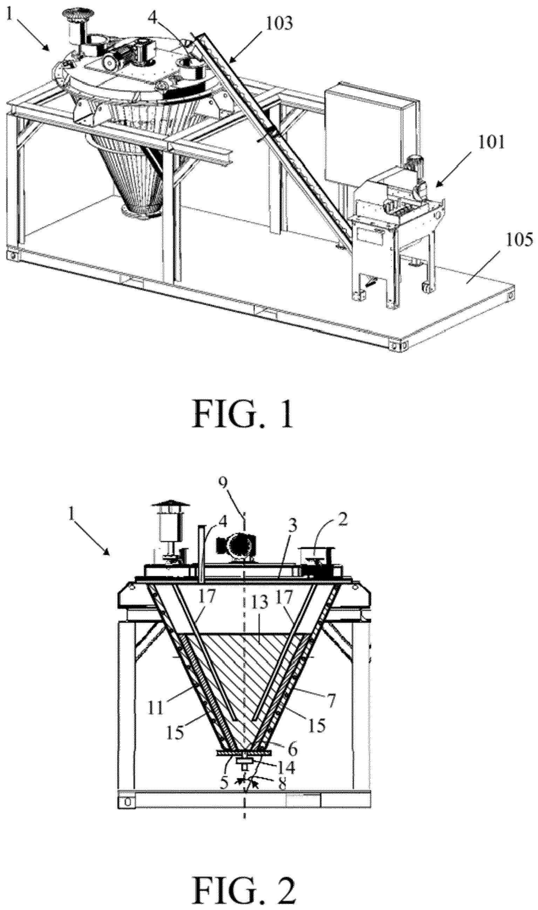

A heat storage system according to the present disclosure, as shown in figure 1, comprises a storage container 1 for a heat storage mass that is convertible from a solid to a liquid phase by adding heat and from a liquid to a solid state by releasing heat. The heat storage mass can be a salt as well as a metal that can be molten and can solidify again. In the embodiment as shown in figure 1, the heat storage mass is a salt that is typically used in heat storage applications. The heat storage system further comprises a shredder 101 for shredding large pieces of solid salt into smaller pieces. Further, the heat storage system comprises transport means 103 for transporting the smaller pieces of solid salt to a filling opening 2 arranged in the storage container. The storage container, the shredder and the transport means can be mounted on a plateau 105 which can be placed on a transport vehicle to be moved to a location where such a heat storage system is needed.

As shown in figure 2, the storage container 1 has an upper wall 3, a bottom wall 5 and a lateral wall 7 that is extending in between the upper and the lower wall. The lateral wall 7 has a downwardly narrowing truncated form and extends circumferentially such that a closed wall is obtained. The lateral wall has an inclination angle 8 of about minimum 10, more in particular 20 and most in particular 25 degrees with respect to a vertical extending plane 9. More in particular, the lateral wall has a truncated conical shape.

The storage container is provided with an output opening 6, more in particular arranged in the bottom wall 5 of the storage container and more in particular being continuously in fluid connection with the molten salt 13. This output opening 6 can be closed off by a valve 14 which is operable to open and to close off the output opening 6.

The storage container furthermore comprises one or more electrical heating elements 11 that are arranged to melt solid salt when they are switched on and to let the liquid salt to cool down again and consequently release its heat in case they are switched off again. These electrical heating elements 11 can be placed either inside the storage container against the lateral wall 7 thereof or are arranged in the lateral wall. The electrical heating means can be arranged under the form of a resistance wire or under the form of resistance rods. In an embodiment, the bottom wall 5 is free from such heating means 11. When a solid salt mass is heated, first, a layer 15 of the solid salt that is in contact with the lateral wall 7 starts melting. Once the salt 13 has been molten, one or more further electrical heating elements 17 arranged inside the storage container and spaced apart from the lateral wall can speed up the melting process. These further electrical heating elements are in particular parallel arranged with the lateral wall 7 and can be attached to the upper wall 3 of the storage container 1.

The storage container 1 can form part of a heat transfer system comprising heat exchange means and a circuit connecting the storage container to the heat exchange means. The molten salt can circulate in this circuit between the heat exchange means and the storage container. Such a circuit has an upper and a lower point and the storage container situated at the lower point of the circuit. Alternatively or additionally the heat transfer system comprises a heat exchanger (or a part thereof) being positioned inside the storage container.

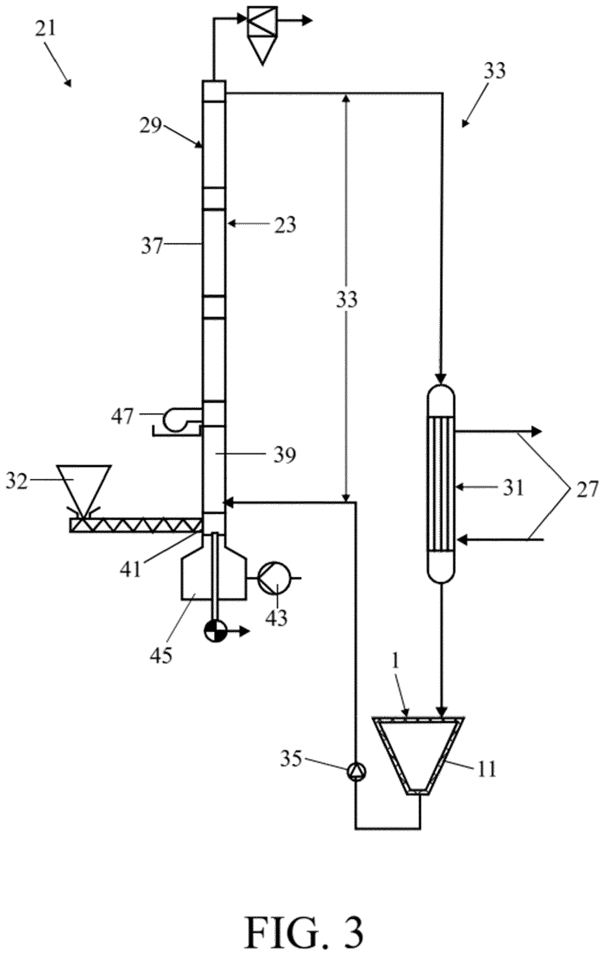

An energy generation system as shown in figure 3 comprises an energy generation system 21 that is provided with a thermal conversion system, in this example a combustion boiler 23 for burning biomass, and a heat transfer system 25 for transferring heat from a thermal conversion system to a steam production device 27. The heat transfer system comprises a heat exchange system 29 inside the combustion boiler, which heats salt to a temperature in excess of 350 °C with heat produced by the thermal conversion system. A heat exchanger 31 utilizes the heat for heating water or overheating steam which is utilized for example for drying wet biomass which in its turn is then fed into the combustion boiler at 32. The heat transfer system further comprises a circuit 33 connecting the storage container 1 to the heat exchange means 29 and 33 and is arranged for circulating molten salt between the heat exchange means and the storage container. The molten salt is pumped by a pump 35 from the storage container 1 to the combustion boiler 23 where it heated. Subsequently, the heated molten salt enters the heat exchanger 31 from which it leaves at a temperature of approximately 250 °C and returns to the storage container. The combustion boiler 23 is provided with a riser and a boiler wall 37 and a combustion space 39 situated inside the boiler wall 37. The bottom of the combustion boiler is formed by a circulating fluidized bed 41. An air blower 43 blows the required amount of air via an air chamber 45 into the fluidized bed 41. For initiating the combustion process, a start burner 47 may be utilized. The riser has several levels which each are cooled to an optimal temperature by the heat transfer medium. The boiler wall 37 is double walled and is cooled by the heat transfer medium. Thus in fact, the boiler wall 37 forms the first heat exchange means 29.

For starting the thermal conversion operation of dried biomass, first solid salt is heated by heating means 11. Once the salt has been heated sufficiently to melt it, it is pumped into the wall 37 of the combustion boiler 23 where it is heated to a higher temperature. From there, the molten salt enters the heat exchanger 31 to produce steam for drying wet biomass to be burned. In this heat exchanger, the temperature of the molten salt is lowered to just above solidifying temperature. The molten salt then flows back into the storage container 1.

## Claims

1. Storage container (1) for a heat storage mass that is convertible from a solid to a liquid phase by adding heat and from a liquid to a solid state by releasing heat, wherein the storage container comprises
- an upper wall (3), a bottom wall (5) and a lateral wall (7) extending in between the upper and the bottom wall,
- heating means (11) that are switchable on and off and that are provided for converting the heat storage mass (13) in the storage container
• from the solid to the liquid phase by adding heat to the heat storage mass when the heating means are switched on, and
• from the liquid to the solid phase by cooling down the liquid heat storage mass when the heating means are switched off,
**CHARACTERIZED IN THAT** the heating means (11) are in the form of one or more electrical heating elements located at the inside of the storage container against the lateral wall thereof or inside the lateral wall (7) of the storage container.

2. Storage container according to claim 1, wherein the electrical heating elements (11) are solely located at the inside of the storage container (1) against the lateral wall (7) thereof or inside the lateral wall (7) of the storage container (1).

3. Storage container according to claim 1 or 2, wherein the heat storage mass has an upper surface, and wherein the storage container comprises one or more further electric heating elements (17) located inside the container (1) spaced apart from the lateral wall (7) and extending through the upper surface of the heat storage mass, wherein the further heating elements are arranged to start heating the heat storage mass once the upper surface of the heat storage mass has been liquefied.

4. Storage container according to claim 3, wherein the further electric heating elements are fixed to the upper wall (5) of the storage container.

5. Storage container according to any one of the preceding claims, wherein the lateral wall (7) has a downwardly narrowing, truncated and circumferentially walled shape and having an inclination angle (8) of at least 10 degrees versus a vertical plane.

6. Storage container according to claim 5, wherein the inclination angle (8) versus a vertical plane is at least 20 degrees.

7. Storage container according to claim 6, wherein the inclination angle (8) versus a vertical plane is around 25 degrees.

8. Storage container according to claims 6 or 7, wherein the lateral wall (7) has a downwardly narrowing truncated conical shape.

9. Storage container according to any one of the preceding claims, wherein an output opening (6) is provided that, during operation, is constantly in fluid connection with the liquid heat storage mass (13).

10. Storage container according to any one of the preceding claims, wherein the output opening (6) is located in the bottom wall (5) of the storage container (1).

11. Storage container according to claim 9 or 10, wherein the storage container comprises a valve (14) which is operable to open and close the output opening (6).

12. Storage container according to any one of the preceding claims, wherein the heat storage mass (13) is a molten salt or a molten metal.

13. Heat storage system, comprising
- a storage container (1) according to any one of the preceding claims,
- a shredder (101) for shredding large pieces of solid heat storage mass into smaller pieces; and
- transport means (103) for transporting the smaller pieces of solid heat storage mass to a filling opening (2) provided in the storage container.

14. Heat transfer system, comprising
- a storage container (1) according to any one of claims 1 to 12,
- heat exchange means (29, 31); and
- a circuit (33) for connecting the storage container (1) to the heat exchange means (29, 31) and provided for circulating the liquid heat storage mass between the heat exchange means and the storage container, wherein the circuit has a lower point and an upper point, the storage container being situated at the lower point of the circuit.
